# FASCICULE DE BREVET EUROPEEN

(11) **EP 4 093 979 B1**
(45) Date de publication et mention de la délivrance du brevet: **30.10.2024**
(21) Numéro de dépôt: 21700952.1
(22) Date de dépôt: 20.01.2021
(51) Int. Cl.: F15B 15/14, B64C 25/00

(54) **ACTIONNEUR À PORT D'ALIMENTATION DÉPORTÉ**
STELLANTRIEB MIT VERSETZTEM VERSORGUNGSANSCHLUSS
ACTUATOR WITH OFFSET SUPPLY PORT

(30) Priorité: 24.01.2020 FR 2000724
(43) Date de publication de la demande: 30.11.2022
(73) Titulaire: Safran Landing Systems, 78140 Vélizy-Villacoublay (FR)
(72) Inventeur: COURTOIS de LOURMEL, Yves, 77550 MOISSY-CRAMAYEL (FR); MESSE, Sébastien, 77550 MOISSY-CRAMAYEL (FR); KAMIS, Jean-Baptiste, 77550 MOISSY-CRAMAYEL (FR); LE BRETON, Arnaud, 77550 MOISSY-CRAMAYEL (FR); NGUYEN, Nicolas, 77550 MOISSY-CRAMAYEL (FR)
(74) Mandataire: Cabinet Boettcher
(86) Numéro de dépôt international: PCT/EP2021/051228
(87) Numéro de publication internationale: WO 2021/148486

(56) Documents cités:
- DE-A1- 102009 021 351
- DE-A1- 102011 015 648
- DE-A1- 102016 217 006
- DE-A1- 102017 206 297
- DE-A1- 3 820 078
- FR-A1- 2 755 742

## Description

La présente invention concerne un actionneur comprenant au moins un port d'alimentation déporté. L'actionneur est par exemple un vérin destiné à équiper un aéronef.

### ARRIERE PLAN DE L'INVENTION

On connaît des aéronefs dont le train d'atterrissage est monté mobile entre une position déployée et une position rétractée et comprend un actionneur de déverrouillage autorisant le déplacement du train de la position rétractée vers la position déployée. L'actionneur de déverrouillage est en général un vérin hydraulique comportant un corps tubulaire dans lequel une tige est montée à coulissement. La tige est solidaire d'un piston qui sépare un volume intérieur du corps en deux chambres isolées l'une de l'autre. Deux ports de raccordement permettent d'introduire ou d'évacuer un fluide dans l'une ou l'autre des chambres et ainsi déplacer la tige.

Pour des raisons d'encombrement et de performances dynamiques du vérin, les ports de raccordement sont déportés de façon à être éloignés du corps du vérin. Chaque port de raccordement est relié au corps du vérin par un conduit débouchant dans l'une des chambres. Les conduits sont traditionnellement des canaux qui ont été percés dans un massif s'étendant en saillie d'une surface extérieure du corps du vérin. Le corps et le massif sont généralement fabriqués par forgeage ou par assemblage de pièces préalablement usinées.

Cet agencement rend l'actionneur relativement lourd et volumineux, ce qui pénalise la masse globale de l'appareil et complique l'intégration de l'actionneur dans le volume dévolu sur l'aéronef au train d'atterrissage.

Un exemple d'actionneur connu est divulgué par le document DE 38 20 078 A1.

### OBJET DE L'INVENTION

L'invention a donc pour objet de proposer un actionneur à ports d'alimentation déportés permettant d'obvier au moins en partie aux problèmes précités.

### RESUME DE L'INVENTION

A cet effet, on prévoit, selon l'invention, un actionneur comprenant un corps s'étendant selon un axe central et au moins un premier port de raccordement déporté. Le port de raccordement est relié au corps par un premier conduit s'étendant en saillie dudit corps.

Selon l'invention, le premier port de raccordement est relié mécaniquement au corps par au moins une première membrure et une deuxième membrure, la première membrure et la deuxième membrure s'étendant depuis le premier port de raccordement jusqu'à respectivement un premier tronçon du corps et un deuxième tronçon du corps axialement distant du premier tronçon.

L'utilisation de telles membrures pour lier au corps le port de raccordement permet de limiter le poids de l'actionneur, les membrures laissant entre elles des espaces dépourvus de matière, tout en garantissant la tenue en vibration et en pression du port de raccordement.

Selon un mode de réalisation particulier de l'invention, l'actionneur comprend un deuxième port de raccordement déporté relié au corps par un deuxième conduit. Le deuxième port de raccordement est relié mécaniquement au corps par au moins une troisième membrure et une quatrième membrure, la troisième membrure et la quatrième membrure s'étendant depuis le deuxième port de raccordement jusqu'à deux portions du corps axialement distantes l'une de l'autre.

De manière particulière, le deuxième port de raccordement est aligné avec le premier port de raccordement, et la quatrième membrure et la deuxième membrure ont un tronçon commun.

De manière particulière, au moins l'une de la troisième membrure et de la quatrième membrure est agencé pour relier mécaniquement une partie du premier conduit au corps.

De manière particulière, au moins deux des membrures ont une partie s'étendant selon un plan longitudinal médian du corps.

De manière particulière, le premier conduit s'étend selon le plan longitudinal médian du corps.

De manière particulière, la première membrure et la deuxième membrure ont une longueur sensiblement identique.

De manière particulière, au moins l'une des membrures a une section transversale en forme de V.

Selon une caractéristique particulière, l'actionneur comprend un voile assurant une liaison mécanique entre le corps, chaque conduit, et les membrures.

De manière particulière, le voile comporte des trous d'évacuation.

Selon une caractéristique particulière, l'actionneur comprend au moins une nervure s'étendant d'un côté du voile depuis l'un des conduits jusqu'à l'une des membrures.

De manière particulière le corps, chaque conduit et chaque port de raccordement forment une pièce monobloc obtenue par fabrication additive.

L'invention concerne également un atterrisseur ayant au moins une position sortie et une position rentrée, et comportant un tel actionneur pour verrouiller ou déverrouiller l'atterrisseur dans au moins l'une de ses deux positions.

### BREVE DESCRIPTION DES DESSINS

L'invention sera mieux comprise à la lumière de la description qui suit, laquelle est purement illustrative et non limitative, et doit être lue en regard des dessins annexés, parmi lesquels :
- la figure 1 est une vue en perspective d'un actionneur selon un mode de réalisation particulier de l'invention ;

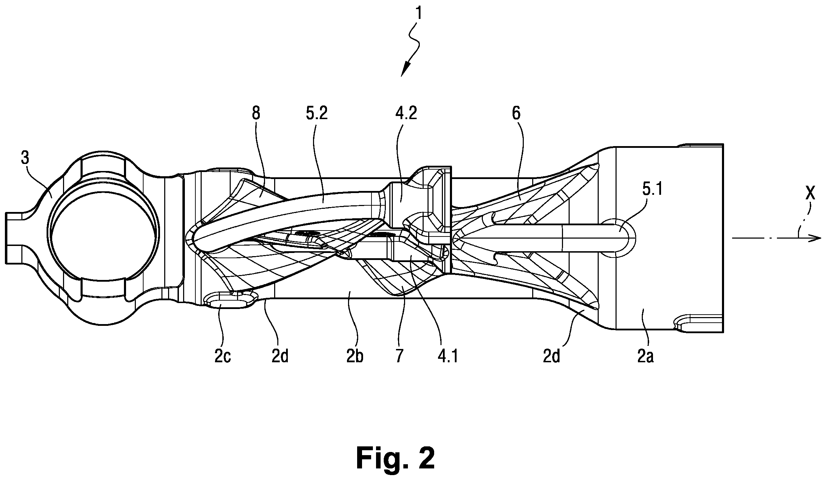

- la figure 2 est une vue de dessus de l'actionneur illustré à la figure 1 ;

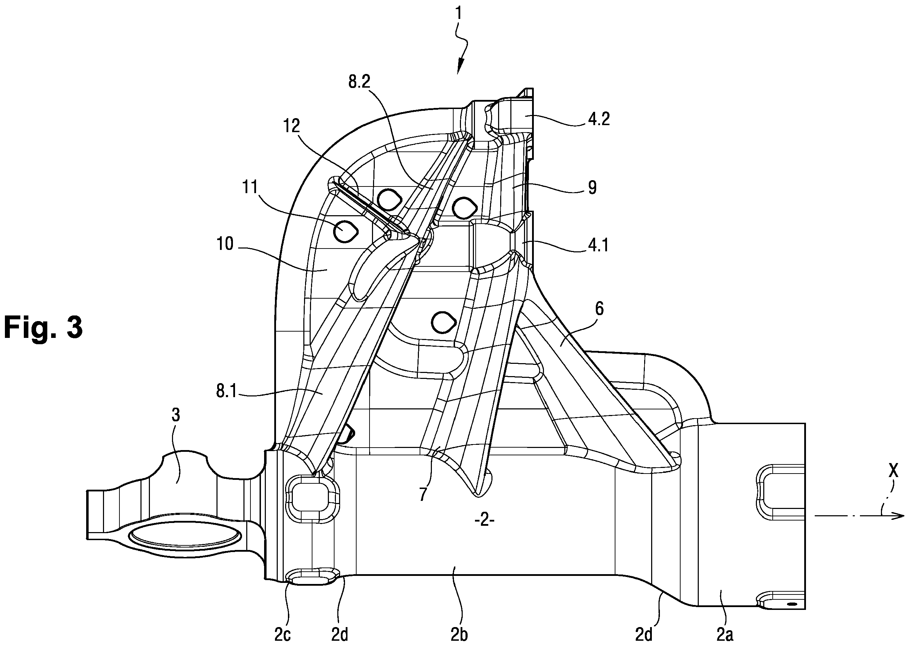

- la figure 3 est une vue de côté de l'actionneur illustré à la figure 1 ;

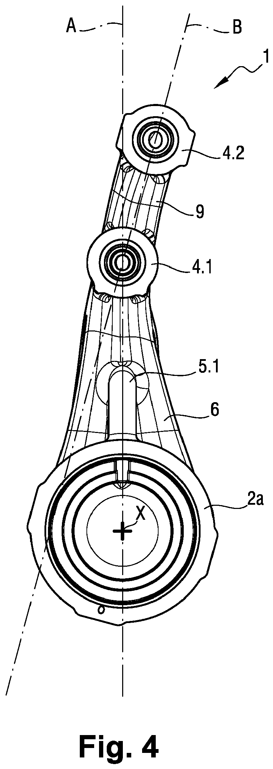

- la figure 4 est une vue de face de l'actionneur illustré à la figure 1.

### DESCRIPTION DETAILLEE DE L'INVENTION

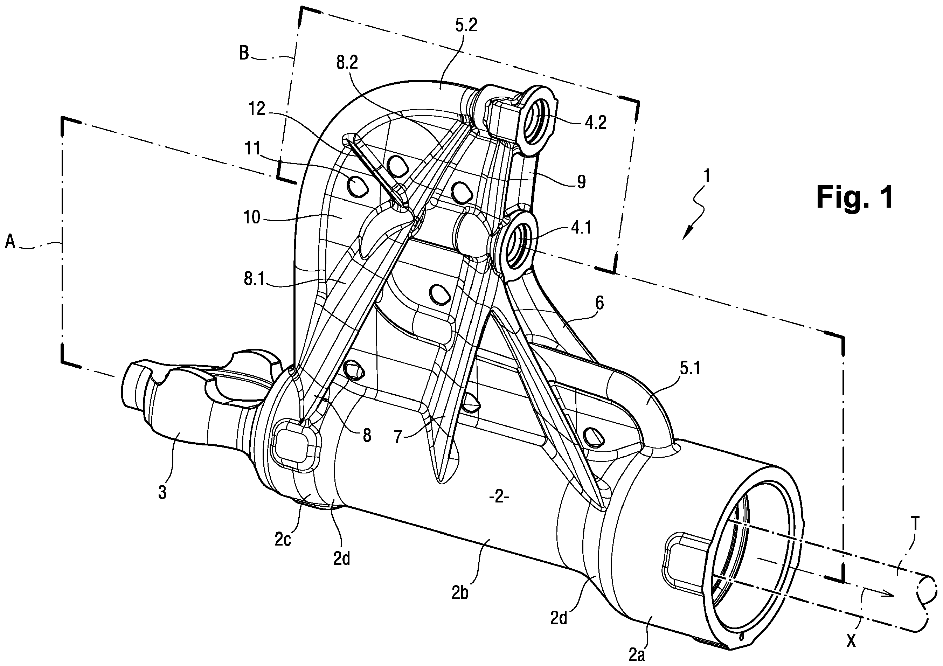

En référence à la figure 1, un actionneur 1 comprend, selon un mode de réalisation particulier de l'invention, un corps 2 globalement tubulaire s'étendant selon un axe X central.

Le corps 2 comprend successivement un premier tronçon d'extrémité 2a, un tronçon intermédiaire 2b et un deuxième tronçon d'extrémité 2c ayant chacun une surface externe de forme cylindrique s'étendant selon l'axe X.

Le premier tronçon d'extrémité 2a et le deuxième tronçon d'extrémité 2c sont reliés au tronçon intermédiaire 2b via des portions de raccordement 2d ayant des surfaces externes de forme tronconique dont les petites bases sont raccordées à la surface externe du tronçon intermédiaire 2b et dont les grandes bases sont raccordées aux surfaces externes du premier tronçon d'extrémité 2a et du deuxième tronçon d'extrémité 2c.

Le corps 2 forme le corps principal d'un vérin hydraulique double effet et définit de façon connue en soi un volume intérieur à l'intérieur duquel une tige T est montée à coulissement selon l'axe X et s'étend en saillie du premier tronçon d'extrémité 2a du corps 2. La tige est solidaire d'un piston séparant le volume intérieur du corps 2 en deux chambres isolées l'une de l'autre.

Le deuxième tronçon d'extrémité 2c est raccordé à un palier 3 d'articulation de l'actionneur 1 à la structure d'un aéronef. Le corps 2 forme ainsi une interface de liaison à la tige de l'actionneur 1 et le palier 3 forme une interface de liaison à la structure de l'aéronef.

L'actionneur 1 comprend un premier port de raccordement 4.1 et un deuxième port de raccordement 4.2 permettant d'introduire ou d'évacuer un fluide dans l'une ou l'autre des deux chambres et ainsi déplacer la tige. Le premier port de raccordement 4.1 et le deuxième port de raccordement 4.2 sont sensiblement identiques et comprennent chacun une partie tubulaire délimitant un canal agencé pour recevoir une portion d'extrémité d'un conduit de raccordement.

Le premier port de raccordement 4.1 et le deuxième port de raccordement 4.2 s'étendent sensiblement parallèlement à l'axe X central du corps 2 et leurs extrémités libres s'étendant sensiblement dans un même plan orthogonal audit axe X de sorte que les deux ports de raccordement sont alignés l'un avec l'autre. La distance séparant le premier port de raccordement 4.1 du corps 2 est inférieure à celle séparant le deuxième port de raccordement 4.2 dudit corps 2 de sorte que le premier port de raccordement 4.1 s'étend entre le deuxième port de raccordement 4.2 et le corps 2 sur l'ensemble des figures.

Un premier conduit 5.1 relie le premier port de raccordement 4.1 au premier tronçon d'extrémité 2a du corps 2 à partir duquel s'étend en saillie la tige de l'actionneur. La fibre neutre du premier conduit 5.1 s'étend sensiblement sur toute sa longueur dans un plan A comprenant l'axe X central du corps 2 (le plan A constitue ainsi un plan longitudinal médian du corps 2). Le premier conduit 5.1 comprend successivement une portion en quart de cercle dont une extrémité débouche dans l'une des chambres du corps 2, une première portion rectiligne sensiblement parallèle à l'axe X, une portion en demi-cercle et une deuxième portion rectiligne, s'étendant parallèlement à l'axe X central en regard de la première portion rectiligne, dont une extrémité débouche dans le premier port de raccordement 4.1.

Un deuxième conduit 5.2 relie le deuxième port de raccordement 4.2 au deuxième tronçon d'extrémité 2c du corps 2 portant le palier 3. Le deuxième conduit 5.2 comprend une première portion rectiligne sensiblement perpendiculaire à l'axe X central du corps 2 et dont une extrémité débouche dans l'autre des chambres du corps 2, et une portion en quart de cercle dont une extrémité débouche dans le deuxième port de raccordement 4.2. La portion rectiligne du deuxième conduit 5.2 a un axe central s'étendant dans le plan A dans lequel s'étend également l'axe central du premier conduit 5.1, tandis que la portion en quart de cercle du deuxième conduit d'alimentation 5.2 a un axe central s'étendant globalement dans un plan B qui est légèrement incliné par rapport au plan A et sensiblement parallèle à l'axe X.

Le premier port de raccordement 4.1 est relié mécaniquement au corps 2 par deux membrures 6, 7 sensiblement rectilignes et ayant des longueurs sensiblement identiques. Les membrures 6, 7 s'étendent chacune depuis la surface externe du tronçon intermédiaire 2b du corps 2 et convergent l'une vers l'autre pour se raccorder à une surface inférieure du premier port de raccordement 4.1. Les membrures 6, 7 présentent une section transversale en forme de V dont la pointe appartient au plan A, de sorte que ledit plan A forme sensiblement un plan de symétrie pour lesdites membrures 6, 7. Les bords libres des membrures 6, 7 tangentent sensiblement la surface externe du tronçon intermédiaire 2b du corps 2.

Le deuxième port de raccordement 4.2 est relié mécaniquement au corps 2 par une membrure 8 comprenant deux parties 8.1, 8.2 sensiblement rectilignes s'étendant dans le prolongement l'une de l'autre depuis la surface externe du deuxième tronçon d'extrémité 2c du corps 2 jusqu'à une surface inférieure du deuxième port de raccordement 4.2. De manière identique aux membrures 6, 7, la première partie 8.1 de la membrure 8 relie le corps 2 à la portion en demi-cercle du premier conduit 5.1 et présente une section transversale en forme de V dont la pointe appartient au plan A, de sorte que ledit plan A forme sensiblement un plan de symétrie pour la première partie 8.1 de la membrure 8. La deuxième partie 8.2 de la membrure 8 relie le deuxième port de raccordement 4.2 à la portion en demi-cercle du premier conduit 5.1 et présente une section transversale en forme de V dont la pointe appartient au plan B, de sorte que ledit plan B forme sensiblement un plan de symétrie pour la deuxième partie 8.2 de la membrure 8. Les bords libres de la première partie 8.1 de la membrure 8 tangentent sensiblement la surface externe du deuxième tronçon d'extrémité 2c d'extrémité du corps 2 et les bords libres de la deuxième partie 8.2 de la membrure 8 tangentent sensiblement la surface externe de la portion en demi-cercle du premier conduit 5.1.

Le deuxième port de raccordement 4.2 est en outre relié mécaniquement au corps 2 et au premier port de raccordement 4.1 par une membrure 9 sensiblement rectiligne s'étendant depuis une surface supérieure du premier port de raccordement 4.1 jusqu'à une surface inférieure du deuxième port de raccordement 4.2. La membrure 9 est sensiblement dans le prolongement de la membrure 7 qui forme un tronçon commun à la membrure 7 et à la membrure 9, et présente une section transversale en forme de V dont la pointe appartient au plan B, de sorte que ledit plan B forme sensiblement un plan de symétrie pour la membrure 9.

On notera que l'ensemble des membrures 6, 7, 8, 9 s'étendent exclusivement à l'extérieur des conduits d'alimentation 5.1, 5.2 afin de ne pas entraver la circulation du fluide circulant dans lesdits conduits d'alimentation 5.1, 5.2.

L'actionneur 1 comprend ici un voile 10 s'étendant en partie dans le plan A et dans le plan B en assurant une liaison entre les conduits d'alimentation 5.1, 5.2, les membrures 6, 7, 8, 9 et le corps 2.

Avantageusement, le voile 10 est percé de trous 11 d'évacuation permettant d'éviter à un liquide de stagner sur ledit voile 10 lorsque l'actionneur est positionné de telle manière que le voile 10 est sensiblement horizontal.

L'actionneur 1 comprend également une nervure 12 sensiblement rectiligne s'étendant de part et d'autre du voile 10 depuis la portion en quart de cercle du premier conduit 5.1 jusqu'à la jonction entre la portion en demi-cercle du deuxième conduit 5.2 et la deuxième partie 8.2 de la membrure 8. La nervure 12 assure ainsi une liaison directe entre le premier conduit 5.1, le deuxième conduit 5.2 et la membrure 8.

On comprend que l'utilisation des membrures 6, 7, 8, 9 pour lier au corps 2 le premier port de raccordement 4.1 et le deuxième port de raccordement 4.2 permet de limiter le poids de l'actionneur 1, les membrures laissant entre elles des espaces dépourvus de matière. On comprend également que les membrures ne sont pas dimensionnées pour la transmission des efforts produits par l'actionneur mais pour la reprise des efforts vibratoires, et des efforts engendrés sur les ports de raccordement et les conduits par la pression de fluide, et les efforts engendrés par les canalisations sur les ports de raccordement.

De préférence, l'actionneur est obtenu par fabrication additive, notamment en un alliage de nickel et de chrome (tel que celui produit sous la marque Inconel^{®} par la société Spécial Metals Corporation), en acier ou en titane. Le voile 10 peut alors servir de support pour effectuer un dépôt de matière suivant l'axe X et ainsi obtenir une pièce monobloc. La forme en V des membrures permet de limiter le nombre de support nécessaire à un tel dépôt de matière.

Le dimensionnement de l'actionneur 1 pour la tenue en vibration et en pression des ports de raccordement et des conduits 4.1, 4.2, 5.1, 5.2 est à la portée de l'homme du métier. Ainsi, l'écartement des membrures 6, 7, 8, 9 et leur épaisseur seront notamment définis en fonction du moment d'inertie souhaité.

Bien entendu, l'invention n'est pas limitée au mode de réalisation décrit mais englobe toute variante entrant dans le champ de l'invention telle que définie par les revendications.

Bien qu'ici l'actionneur 1 soit hydraulique et comprenne des ports de raccordement 4.1, 4.2 et des conduits 5.1, 5.2 hydrauliques, l'actionneur peut aussi être électrique et comprendre des ports de raccordement et des conduits électriques, ou bien encore pneumatique.

Le nombre de ports et de conduits d'alimentation peut être égal à un (cas par exemple d'un vérin simple effet) ou supérieur à deux.

Bien qu'ici la section transversale des membrures présente une forme en V, elle peut être de forme différente (pleine, creuse, en I...) .

L'actionneur peut ne pas comprendre de voile 10.

Le voile 10 peut être dépourvu de trou 11 d'évacuation.

Bien qu'ici le corps 2 soit de forme globalement tubulaire et comprenne une succession de tronçons 2a, 2b, 2c, 2d ayant une surface externe de forme cylindrique ou tronconique, le corps 2 peut être de forme différente et par exemple ne comprendre qu'un unique tronçon ayant une surface externe de forme cylindrique ou autre.

Le premier port de raccordement 4.1 et/ou le deuxième port de raccordement 4.2 peuvent ne pas s'étendre parallèlement à l'axe X central du corps 2.

Bien qu'ici l'actionneur 1 soit utilisé pour déverrouiller le train d'atterrissage d'un aéronef, l'invention s'applique à tout type d'actionneur nécessitant au moins un port de raccordement 4.1, 4.2 déporté, comme par exemple pour l'ouverture et/ou la fermeture de volets fermant l'espace dans lequel se loge le train d'atterrissage, ou encore pour le déploiement d'inverseurs de poussée. L'actionneur 1 peut également être employé dans tout autre domaine que celui de l'aéronautique.

## Revendications

1. Actionneur (1) comprenant un corps (2) s'étendant selon un axe central (X) et au moins un premier port de raccordement (4.1) déporté qui est relié au corps (2) par un premier conduit (5.1) s'étendant en saillie dudit corps (2), le premier port de raccordement (4.1) étant relié mécaniquement au corps par au moins une première membrure (6) et une deuxième membrure (7), **caractérisé en ce que** la première membrure et la deuxième membrure s' étendent depuis le premier port de raccordement jusqu'à respectivement un premier tronçon du corps et un deuxième tronçon du corps axialement distant du premier tronçon.

2. Actionneur (1) selon la revendication 1, comprenant un deuxième port de raccordement (4.2) déporté relié au corps (2) par un deuxième conduit (5.2), et dans lequel le deuxième port de raccordement (4.2) est relié mécaniquement au corps (2) par au moins une troisième membrure (8) et une quatrième membrure (9), la troisième membrure et la quatrième membrure s'étendant depuis le deuxième port de raccordement jusqu'à deux portions du corps axialement distantes l'une de l'autre.

3. Actionneur selon la revendication 2, dans lequel le deuxième port de raccordement (4.2) est aligné avec le premier port de raccordement (4.1) et dans lequel la quatrième membrure (9) et la deuxième membrure (7) ont un tronçon commun.

4. Actionneur selon la revendication 2 ou 3, dans lequel au moins l'une de la troisième membrure (8) et de la quatrième membrure (9) est agencé pour relier mécaniquement une partie du premier conduit (5.1) au corps (2) .

5. Actionneur (1) selon l'une quelconque des revendications précédentes, dans lequel au moins deux des membrures (6, 7, 8, 9) ont une partie s'étendant selon un plan longitudinal (A) médian du corps (2).

6. Actionneur (1) selon la revendication 5, dans lequel le premier conduit (5.1) s'étend selon le plan longitudinal (A) médian du corps (2).

7. Actionneur (1) selon l'une quelconque des revendications précédentes, dans lequel la première membrure (6) et la deuxième membrure (7) ont une longueur sensiblement identique.

8. Actionneur (1) selon l'une quelconque des revendications précédentes, dans lequel au moins l'une des membrures (6, 7, 8, 9) a une section transversale en forme de V.

9. Actionneur (1) selon l'une quelconque des revendications précédentes, comprenant un voile (10) assurant une liaison mécanique entre le corps (2), chaque conduit (5.1, 5.2), et les membrures (6, 7, 8, 9).

10. Actionneur (1) selon la revendication 9, dans lequel le voile (10) comporte des trous (11) d'évacuation.

11. Actionneur (1) selon les revendications 9 ou 10, comprenant au moins une nervure (12) s'étendant d'un côté du voile (10) depuis l'un des conduits (5.2) jusqu'à l'une des membrures (8).

12. Actionneur (1) selon l'une quelconque des revendications précédentes, dans lequel le corps (2), chaque conduit (5.1, 5.2) et chaque port de raccordement (4.1, 4.2) forment une pièce monobloc obtenue par fabrication additive.

13. Atterrisseur ayant au moins une position sortie et une position rentrée et comportant un actionneur de verrouillage ou de déverrouillage de l'atterrisseur dans au moins l'une de ses deux positions, **caractérisé en ce que** l'actionneur est conforme à l'une quelconque des revendications précédentes.

## Patentansprüche

1. Stellantrieb (1) mit einem sich entlang einer Mittelachse (X) erstreckenden Körper (2) und mit zumindest einem ersten, versetzten Verbindungsanschluss (4.1), der mit dem Körper (2) durch eine erste Leitung (5.1) verbunden ist, die sich über den Körper (2) hinaus vorstehend erstreckt, wobei der erste Verbindungsanschluss (4.1) durch zumindest einen ersten Spant (6) und einen zweiten Spant (7) mechanisch mit dem Körper verbunden ist, **dadurch gekennzeichnet, dass** sich der erste und der zweite Spant ausgehend von dem ersten Verbindungsanschluss bis hin zu jeweils einem ersten Körperabschnitt und einem axial von dem ersten Körperabschnitt entfernten, zweiten Körperabschnitt erstrecken.

2. Stellantrieb (1) nach Anspruch 1, mit einem zweiten, versetzten Verbindungsanschluss (4.2), der durch eine zweite Leitung (5.2) mit dem Körper (2) verbunden ist, und wobei der zweite Verbindungsanschluss (4.2) durch zumindest einen dritten Spant (8) und einen vierten Spant (9) mechanisch mit dem Körper (2) verbunden ist, wobei sich der dritte und der vierte Spant ausgehend von dem zweiten Verbindungsanschluss bis hin zu zwei Körperabschnitten erstrecken, die axial voneinander entfernt sind.

3. Stellantrieb nach Anspruch 2, wobei der zweite Verbindungsanschluss (4.2) mit dem ersten Verbindungsanschluss (4.1) fluchtet und wobei der vierte Spant (9) und der zweite Spant (7) einen gemeinsamen Abschnitt aufweisen.

4. Stellantrieb nach Anspruch 2 oder 3, wobei der dritte Spant (8) und/oder der vierte Spant (9) derart angeordnet ist, dass er einen Teilabschnitt der ersten Leitung (5.1) mechanisch mit dem Körper (2) verbindet.

5. Stellantrieb (1) nach einem der vorhergehenden Ansprüche, wobei zumindest zwei der Spanten (6, 7, 8, 9) einen Teilabschnitt aufweisen, der sich entlang einer Längsmittelebene (A) des Körpers (2) erstreckt.

6. Stellantrieb (1) nach Anspruch 5, wobei sich die erste Leitung (5.1) entlang einer Längsmittelebene (A) des Körpers (2) erstreckt.

7. Stellantrieb (1) nach einem der vorhergehenden Ansprüche, wobei der erste Spant (6) und der zweite Spant (7) eine etwa gleiche Länge aufweisen.

8. Stellantrieb (1) nach einem der vorhergehenden Ansprüche, wobei zumindest einer der Spanten (6, 7, 8, 9) einen V-förmigen Querschnitt aufweist.

9. Stellantrieb (1) nach einem der vorhergehenden Ansprüche, welcher ein Vlies (10) umfasst, das eine mechanische Verbindung zwischen dem Körper (2), jeder Leitung (5.1, 5.2) und den Spanten (6, 7, 8, 9) gewährleistet.

10. Stellantrieb (1) nach Anspruch 9, wobei das Vlies (10) Auslassöffnungen (11) enthält.

11. Stellantrieb (1) nach den Ansprüchen 9 oder 10, welcher zumindest eine Rippe (12) umfasst, die sich auf einer Seite des Vlieses (10) ausgehend von einer der Leitungen (5.2) bis hin zu einem der Spanten (8) erstreckt.

12. Stellantrieb (1) nach einem der vorhergehenden Ansprüche, wobei der Körper (2), jede Leitung (5.1, 5.2) und jeder Verbindungsanschluss (4.1, 4.2) ein einstückiges Bauteil bilden, das durch additive Fertigung ausgebildet ist.

13. Fahrwerk mit zumindest einer ausgefahrenen Position und einer eingezogenen Position und mit einem Stellantrieb für die Verriegelung oder die Entriegelung des Fahrwerks in zumindest einer der beiden Positionen, **dadurch gekennzeichnet, dass** der Stellantrieb einem der vorhergehenden Ansprüche entspricht.

## Claims

1. An actuator (1) comprising a body (2) extending along a central axis (X) and at least a first offset connection port (4.1) that is connected to the body (2) by a first duct (5.1) projecting from said body (2), the first connection port (4.1) being mechanically connected to the body at least by a first strut (6) and a second strut (67), **characterized in that** the first strut and the second strut extending from the first connection port respectively to a first segment of the body and to a second segment of the body that is axially spaced apart from the first segment.

2. An actuator (1) according to claim 1, including a second offset connection port (4.2) connected to the body (2) by a second duct (5.2), and wherein the second connection port (4.2) is mechanically connected to the body (2) at least by a third strut (8) and a fourth strut (9), the third and fourth struts extending from the second connection port to two portions of the body that are axially spaced apart from each other.

3. An actuator according to claim 2, wherein the second connection port (4.2) is in alignment with the first connection port (4.1) and wherein the fourth strut (9) and the second strut (7) have a segment in common.

4. An actuator according to claim 2 or claim 3, wherein at least one of the third strut (8) and the fourth strut (9) is arranged to connect a portion of the first duct (5.1) mechanically to the body (2).

5. An actuator (1) according to any preceding claim, wherein at least two of the struts (6, 7, 8, 9) include respective portions lying in a longitudinal mid-plane (A) of the body (2).

6. An actuator (1) according to claim 5, wherein the first duct (5.1) lies in the longitudinal mid-plane (A) of the body (2).

7. An actuator (1) according to any preceding claim, wherein the first strut (6) and the second strut (7) are substantially identical in length.

8. An actuator (1) according to any preceding claim, wherein at least one of the struts (6, 7, 8, 9) has a cross-section that is V-shaped.

9. An actuator (1) according to any preceding claim, including a web (10) providing a mechanical connection between the body (2), each duct (5.1, 5.2), and the struts (6, 7, 8, 9).

10. An actuator (1) according to claim 9, wherein the web (10) includes drain holes (11).

11. An actuator (1) according to claim 9 or claim 10, including at least one rib (12) extending on one side of the web (10) from one of the ducts (5.2) to one of the struts (8).

12. An actuator (1) according to any preceding claim, wherein the body (2), each duct (5.1, 5.2), and each connection port (4.1, 4.2) together form a single piece that is obtained by additive manufacturing.

13. An undercarriage having at least an extended position and a retracted position, and including an actuator for locking or unlocking the undercarriage in at least one of its two positions, the undercarriage being **characterized in that** the actuator is in accordance with any preceding claim.
